# EUROPÄISCHE PATENTSCHRIFT

(11) **EP 2 977 233 B1**
(45) Veröffentlichungstag und Bekanntmachung des Hinweises auf die Patenterteilung: **20.03.2019**
(21) Anmeldenummer: 15167924.8
(22) Anmeldetag: 18.05.2015
(51) Int. Cl.: B60C 13/02

(54) **FAHRZEUGLUFTREIFEN**
PNEUMATIC TYRE FOR A VEHICLE
PNEUMATIQUE DE VÉHICULE

(30) Priorität: 09.07.2014 DE 102014213268
(43) Veröffentlichungstag der Anmeldung: 27.01.2016
(73) Patentinhaber: Continental Reifen Deutschland GmbH, 30165 Hannover (DE)
(72) Erfinder: Rittweger, Stefan, 30163 Hannover (DE); Riekkola, Jaakko, 30169 Hannover (DE)
(74) Vertreter: Finger, Karsten

(56) Entgegenhaltungen:
- EP-A1- 1 314 581
- DE-A1- 4 429 796
- DE-A1-102008 010 486
- DE-T2- 69 600 888
- JP-A- 2001 225 613
- JP-A- 2004 359 099
- JP-A- 2010 132 239
- KR-A- 20100 000 752

## Beschreibung

Die Erfindung betrifft einen Fahrzeugluftreifen, insbesondere für Personenkraftwagen, mit zwei Seitenflanken, welche die mit der Fahrbahn in Kontakt bringbare mantelförmige Bodenaufstandsfläche des Laufstreifens zwischen sich einschließen, wobei in einer Höhe von 75 % - 100 % jeder Seitenflanke je eine Offshoulder angeordnet ist, gemessen ab Höhe des Felgenhornes des auf eine Felge aufgezogenen und Betriebsdruck aufweisenden Reifens in Richtung Bodenaufstandsfläche, wobei in die Oberfläche zumindest einer Offshoulder eine technisch wirksame Struktur aus ringkreisförmig über den Umfang der Offshoulder umlaufenden Rillen vertieft eingebracht ist, wobei die Rillen parallel zueinander und beabstandet voneinander angeordnet sind und wobei die Rillen einen gerundeten Rillengrund aufweisen.

Ein derartiger Fahrzeugluftreifen ist aus der EP 1 314 581 A1, der JP 2001 225613 A und der DE 10 2008010 486 A1 bekannt.

Es ist allgemein bekannt, auf der Reifenseitenflanke, welche aus Offshoulder und Seitenwand besteht, technisch wirksame Strukturen vorzusehen. Eine derartige technisch wirksame Struktur ist beispielsweise die aus der DE 199 06 658 C2 bekannte Moiree-Schraffur, welche optische Unebenheiten auf der Seitenwand kaschiert. Die technisch wirksamen Strukturen sind erhaben auf die Oberfläche der Reifenseitenflanke aufgesetzt. Nachteilig ist, dass diese erhaben aufgesetzten Strukturen bei Straßenkontakt, wie beispielsweise bei Scheuerkontakt am Bordstein, die auftretenden Scherkräften nicht übertragen können und es zu starkem Abrieb bis zum Abriss der aufgesetzten Struktur kommt. Die technische Struktur verliert über die Lebensdauer des Reifens ihre Wirksamkeit. Erhaben auf die Offshoulder aufgesetzte Strukturen sind weiterhin beispielsweise aus der JP 2001 225613 A und der JP 2010 132239 A bekannt.

Es ist die Aufgabe der Erfindung, einen Fahrzeugluftreifen bereitzustellen, der auf seiner Seitenflanke eine über seine Lebensdauer abriebs- bzw. abrissbeständige technisch wirksame Struktur aufweist.

Die Aufgabe wird erfindungsgemäß dadurch gelöst, dass zwei benachbart umlaufende Rillen einen Abstand von 0,1 mm bis 0,5 mm, bevorzugt von 0,2 mm zueinander aufweisen, wobei sich der Abstand senkrecht zur Rillenerstreckung zwischen den einander zugewandten Rillenkanten der benachbarten Rillen an der Reifenoberfläche bemisst und dass die umlaufenden Rillen eine Rillenbreite von 1 mm bis 4 mm aufweisen, wobei sich die Rillenbreite senkrecht zur Rillenerstreckung bemisst.

Erfindungsgemäß ist die technisch wirksame Struktur, also jede der diese technische Struktur bildende Rille, vertieft in die Reifenflankenoberfläche eingebracht und ist nicht auf die Reifenflankenoberfläche erhaben aufgesetzt. Die technisch wirksame Struktur weist mehrere, mindestens drei benachbart und parallel zueinander angeordnete, in die Reifenoberfläche eingebrachte Rillen mit gerundetem Rillengrund auf. Durch das Anordnen dieser Rillenstruktur (anstatt einer aufgesetzten Struktur) ist ein Abrieb und ein Abriss dieser Struktur vermieden. Der Offshoulderbereich eines Fahrzeugreifens kommt bei extremem Handling mit der Fahrbahnoberfläche in Kontakt. Durch die Anordnung der vorgenannten Rillenstruktur im Offshoulderbereich kommt diese bei extremem Handling mit der Fahrbahnoberfläche in Berührung und stellt zusätzliches Profil zur Verfügung, wodurch ein Handlingvorteil, insbesondere bei Nässe, wenn durch diese Struktur der Wasserfilm durchtrennt wird, erreicht ist. Zusätzlich wird ein Rollwiderstandsvorteil erreicht, da die Struktur nicht auf die Reifenoberfläche aufgesetzt, sondern vertieft eingebracht ist und keine Verwirbelungen der den Reifen anströmenden Luft erzeugt. Wie beim Golfball entsteht der geringe Luftwiderstand durch die Vermeidung von Turbulenzen. Die Strömung legt sich besser an das Objekt an und läuft ruhiger.
Die Rillenbreite stellt einen guten Kompromiss aus Funktion und Bedingungen am Reifen dar, während der Abstand zwischen zwei Rillen vorteilhaft für die Stabilität am Reifen ist.

Vorteilhaft ist es, wenn die umlaufenden Rillen zumindest in die Oberfläche einer Offshoulder in einer Höhe von 75 % - 90 % der Seitenflanke, vorzugsweise in einer Höhe von 75 % - 85 % der Seitenflanke vertieft eingebracht sind. Dieser Bereich wird am Fahrzeug besonders stark von der Luft angeströmt.
Vorteilhaft ist es, wenn die in der Offshoulder umlaufenden Rillen über den Reifenumfang durchgängig und/ oder über den Reifenumfang mit Unterbrechungen angeordnet sind. Um einen möglichst großen Effekt zu erreichen, ist es besser, möglichst viele umlaufende Rillen durchgängig anzuordnen. Um jedoch ebenfalls andere Eigenschaften des Reifens zu erreichen, kann es notwendig sein, umlaufende Rillen auch unterbrochen anzuordnen.
Zweckmäßig ist es, wenn die unterbrochen umlaufenden Rillen vorzugsweise oder ausschließlich an denjenigen Stellen Unterbrechungen aufweisen, an denen vom Laufstreifenprofil in die Offshoulder herunterreichende Querrillen die umlaufenden Rillen kreuzen würden, wobei die an den Unterbrechungen durchbrochenen umlaufenden Rillen vorzugsweise beabstandet zu den Querrillen angeordnet sind. Die technische Wirksamkeit der Querrillen bleibt vollständig erhalten. Durch die Beabstandung ist eine hohe Kantenstabilität der Querrille erreicht.
Vorteilhaft ist es, wenn die umlaufenden Rillen eine Rillentiefe von 0,3 mm bis 1,0 mm aufweisen, wobei sich die Rillentiefe an der größten Rillentiefe senkrecht auf die gedachte Reifenaußenkontur bemisst. Diese Rillentiefe stellt einen guten Kompromiss aus Funktion und Bedingungen am Reifen dar.

Vorteilhaft ist es, wenn die Außenkontur zwischen zwei benachbart angeordneten Rillen in der Seitenflankenkonturebene verläuft und in etwa eben ist.
In einer bestimmten Ausführung der Erfindung ist nur in der Offshoulder die technisch wirksame Struktur aus ringkreisförmig über den Umfang der Offshoulder umlaufenden Rillen angeordnet, wobei die Rillen bevorzugt eine Rillenbreite (B_{O}) von etwa 2,5 mm und bevorzugt eine Rillentiefe (T_{O}) von etwa 0,5 mm aufweisen.
In einer anderen Ausführung der Erfindung weist nicht nur die Offshoulder, sondern zusätzlich auch die Seitenwand diese technische Struktur aus ringkreisförmig über den Umfang umlaufenden und vertieft in die Reifenseitenwand eingebrachten Rillen auf, wobei die Rillen der Reifenseitenwand ebenfalls parallel zueinander und beabstandet voneinander angeordnet sind und wobei die Rillen einen gerundeten Rillengrund aufweisen.

Dabei ist in einer bestimmten Ausführung der Erfindung die Geometrie der Rillenstruktur der Seitenwand und diejenige der Offshoulder gleich.

In einer anderen Ausführung der Erfindung weicht die Geometrie der Rillenstruktur der Seitenwand von der Geometrie der Rillenstruktur der Offshoulder ab, wobei die in der Seitenwand angeordneten, umlaufenden Rillen eine Rillenbreite von etwa 1,5 mm und eine Rillentiefe von etwa 0,6 mm aufweisen und wobei die in der Offshoulder angeordneten umlaufenden Rillen eine Rillenbreite von etwa 2,5 mm und eine Rillentiefe von etwa 0,5 mm aufweisen.

Vorteilhaft ist es, wenn in der Reifenseitenwand die Oberfläche, welche den Abstand zwischen zwei benachbarten Rillen bildet, ebenfalls vertieft in die Seitenwand eingebracht ist, wobei die Oberfläche parallel zur gedachten Reifenaußenkontur verläuft, wobei die Abstandsoberfläche 0,1 mm bis 0,3 mm, vorzugsweise etwa 0,25 mm vertieft angeordnet ist, wobei sich diese Tiefe senkrecht auf die gedachte Reifenaußenkontur bemisst.

Weitere Merkmale, Vorteile und Einzelheiten der Erfindung werden nun anhand der Zeichnungen, die schematische Ausführungsbeispiele darstellen, näher beschrieben. Dabei zeigen die:
Fig. 1 die Außenkontur eines auf eine Felge aufgezogenen PKW-Reifens im Querschnitt;
Fig. 2 die Aufsicht auf einen abgewickelten Laufstreifenabschnitt samt Offshoulder mit technischer Struktur des PKW-Reifens der Fig. 1;
Fig. 3 einen Querschnitt durch die in der Offshoulder angeordnete technische Struktur des Reifens der Fig. 1;
Fig. 4 einen Querschnitt einer Außenkontur einer Reifenseitenflanke eines anderen erfindungsgemäßen Reifens.

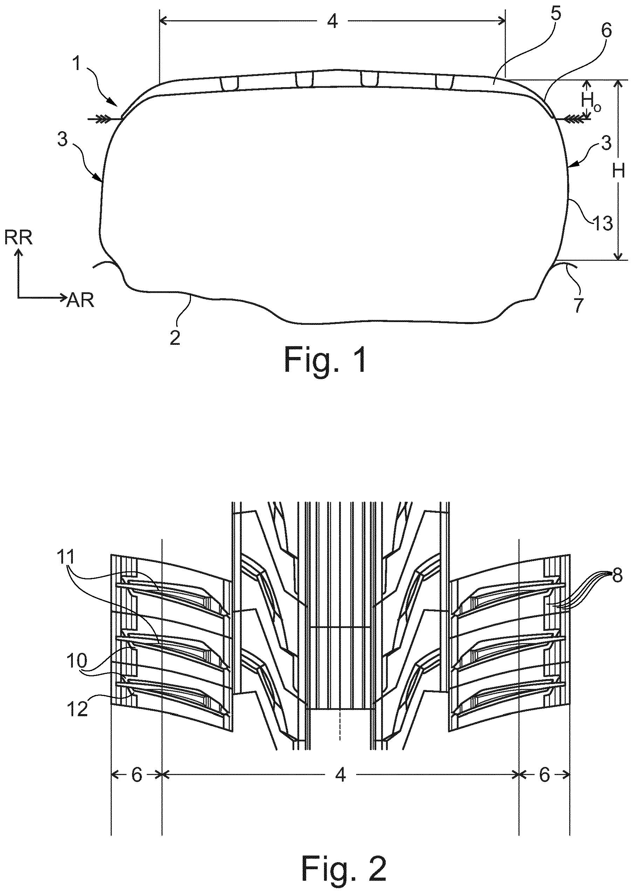

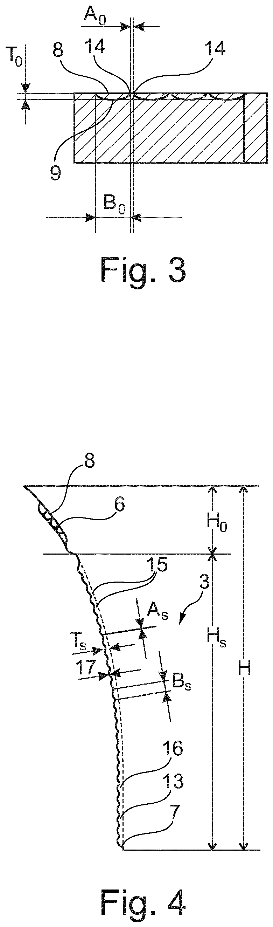

Die Fig. 1 zeigt die Außenkontur eines auf eine Felge 2 aufgezogenen PKW-Luftreifens 1 im Querschnitt. Dieser weist zwei Seitenflanken 3 auf, welche die mit der Fahrbahn (nicht dargestellt) in Kontakt bringbare mantelförmige Bodenaufstandsfläche 4 des Laufstreifens 5 zwischen sich einschließen. In einer Höhe H_{O} von 75 % - 100 % jeder Seitenflankenhöhe H ist je eine Offshoulder 6 angeordnet, gemessen in radialer Richtung RR ab dem oberem Ende des Felgenhornes 7 des auf eine Felge 2 aufgezogenen und Betriebsdruck aufweisenden Reifens 1 in Richtung Bodenaufstandsfläche 4.
In die Oberfläche der Offshoulder 6 ist eine technisch wirksame Struktur aus vier ringkreisförmig über den Umfang der Offshoulder 6 umlaufenden Rillen 8 vertieft eingebracht. Die Rillen 8 sind parallel zueinander und beabstandet voneinander angeordnet. Die Rillen 8 weisen einen gerundeten Rillengrund 9 auf. Dabei zeigt die Fig. 2 einen Abschnitt eines abgewickelten Laufstreifens 5 samt Offshoulder 6 mit technisch wirksamer Struktur des PKW-Reifens der Fig. 1, während die Fig. 3 einen Querschnitt durch die in der Offshoulder 6 angeordnete technische Struktur des Reifens der Fig. 1 zeigt. Die Figuren 1 bis 3 werden zusammen beschrieben.
Die vier umlaufenden Rillen 8 der technischen Struktur sind in der Offshoulder 6 in einer Höhe von 75 % - 85 % der Seitenflankenhöhe H vertieft eingebracht. Die Nut, welche oberhalb der nicht dargestellten Seitenwand (hier in der Fig. 2 ganz außen) angeordnet ist, gehört nicht mit zur technischen Struktur, sondern ist eine sogenannte "Trennnut" direkt an der Formteilung. Die in der Offshoulder 6 umlaufenden Rillen 8 sind über den Reifenumfang mit Unterbrechungen 10 angeordnet. Dabei sind die Unterbrechungen 10 ausschließlich an denjenigen Stellen angeordnet, an denen vom Laufstreifenprofil in die Offshoulder 6 herunterreichende Querrillen 11 die umlaufenden Rillen 8 kreuzen. Die drei oberen, dem Laufstreifen zugewandten Rillen 8 enden mit einer Beabstandung 12 in den Unterbrechungen 10 zu den Querrillen 11. Die unterste Rille 8, welche diejenige ist, die der Seitenwand 13 am nächsten liegt, mündet direkt in die Querrille 11 ein.

Die in der Offshoulder 6 angeordneten, umlaufenden Rillen 8 weisen eine Rillenbreite B_{O} von etwa 2,5 mm auf, wobei sich die Rillenbreite B_{O} senkrecht zur Rillenerstreckung bemisst. Die Rillentiefe T_{O} beträgt etwa 0,5 mm, wobei sich die Rillentiefe T_{O} an der größten Rillentiefe senkrecht auf die gedachte Reifenaußenkontur bemisst. Zwei benachbart zueinander angeordnete Rillen 8 weisen einen Abstand A_{O} von etwa 0,2 mm zueinander auf, wobei sich der Abstand A_{O} senkrecht zur Rillenerstreckung zwischen den einander zugewandten Rillenkanten 14 der benachbarten Rillen 8 an der Reifenoberfläche bemisst.
Die Außenkontur zwischen zwei benachbart angeordneten Rillen 8 entspricht der Seitenflankenkontur und ist in etwa eben.

Die Fig. 4 zeigt einen Querschnitt der Außenkontur der Reifenseitenflanke 3 eines anderen erfindungsgemäßen Reifens. Die Reifenseitenflanke 3 besteht aus Offshouder 6 und Seitenwand 13.
Die Seitenwand 13 erstreckt sich in einer Höhe H_{S} von 0% bis 75% der Seitenflankenhöhe H, gemessen ab dem oberem Ende des Felgenhornes 7 des auf eine Felge 2 aufgezogenen und Betriebsdruck aufweisenden Reifens in Richtung Bodenaufstandsfläche (nicht dargestellt). Die Reifenseitenflanke 3 weist zusätzlich zu der in den Figuren 1 - 3 beschriebenen technischen Struktur in der Offshoulder 6 eine weitere technische Struktur in der Seitenwand 13 auf. Diese technische Struktur der Seitenwand 13 besteht aus ringkreisförmig über den Umfang der Seitenwand 13 umlaufenden und vertieft in die Seitenwand 13 eingebrachten Rillen 15, wobei die Rillen 15 parallel zueinander und beabstandet voneinander angeordnet sind und wobei die Rillen 15 einen gerundeten Rillengrund 16 aufweisen. Die Geometrie der Rillenstruktur 15 der Seitenwand 13 weicht von der Geometrie der Rillenstruktur 8 der Offshoulder 6 ab.
Die in der Seitenwand 13 angeordneten, umlaufenden Rillen 15 weisen eine Rillenbreite B_{S} von etwa 1,5 mm auf, wobei sich die Rillenbreite senkrecht zur Rillenerstreckung bemisst. Die in der Seitenwand angeordneten, umlaufenden Rillen weisen eine Rillentiefe T_{S} von etwa 0,6 mm auf, wobei sich die Rillentiefe an der größten Rillentiefe senkrecht auf die gedachte Reifenaußenkontur (gestrichelt dargestellte Linie) bemisst. Zwei in der Seitenwand 13 angeordnete, benachbart zueinander umlaufende Rillen 15 weisen einen Abstand A_{S} von etwa 0,2 mm zueinander auf, wobei sich der Abstand senkrecht zur Rillenerstreckung zwischen den einander zugewandten Rillenkanten der benachbarten Rillen an der Reifenoberfläche bemisst. Die Oberfläche, welche den Abstand zwischen zwei benachbarten Rillen bildet, ist ebenfalls vertieft in die Seitenwand eingebracht, wobei deren Oberfläche parallel zur gedachten Reifenaußenkontur verläuft und wobei deren Oberfläche etwa 0,25 mm vertieft angeordnet ist, wobei sich deren Tiefe 17 senkrecht auf die gedachte Reifenaußenkontur bemisst.

### Bezugszeichenliste

### (Teil der Beschreibung)

- 1: Fahrzeugluftreifen
- 2: Felge
- 3: Seitenflanke
- 4: Bodenaufstandsfläche
- 5: Laufstreifen
- 6: Offshoulder
- 7: Felgenhorn
- 8: Rille
- 9: Rillengrund
- 10: Unterbrechung
- 11: Querrille
- 12: Beabstandung
- 13: Seitenwand
- 14: Rillenkante
- 15: Rille
- 16: Rillengrund
- 17: Tiefe
- H: Höhe Reifenseitenflanke
- HO: Höhe Offshoulder
- HS: Höhe Seitenwand
- BO: Breite der Rille in der Offshoulder
- TO: Tiefe der Rille in der Offshoulder
- AO: Abstand zweier benachbarter Rillen in der Offshoulder
- BS: Breite der Rille in der Seitenwand
- TS: Tiefe der Rille in der Seitenwand
- AS: Abstand zweier benachbarter Rillen in der Seitenwand
- RR: Radiale Richtung
- AR: Axiale Richtung

## Patentansprüche

1. Fahrzeugluftreifen (1), insbesondere für Personenkraftwagen, mit zwei Seitenflanken (3), welche die mit der Fahrbahn in Kontakt bringbare mantelförmige Bodenaufstandsfläche (4) des Laufstreifens (5) zwischen sich einschließen, wobei in einer Höhe (H) von 75 % - 100 % jeder Seitenflanke (3) je eine Offshoulder (6) angeordnet ist, gemessen ab Höhe des Felgenhornes (7) des auf eine Felge (2) aufgezogenen und Betriebsdruck aufweisenden Reifens (1) in Richtung Bodenaufstandsfläche (4), wobei in die Oberfläche zumindest einer Offshoulder (6) eine technisch wirksame Struktur aus ringkreisförmig über den Umfang der Offshoulder (6) umlaufenden Rillen (8) vertieft eingebracht ist, wobei die Rillen (8) parallel zueinander und beabstandet voneinander angeordnet sind und wobei die Rillen (8) einen gerundeten Rillengrund (9) aufweisen, **dadurch gekennzeichnet, dass** zwei benachbart umlaufende Rillen (8, 15) einen Abstand (A_{O,S}) von 0,1 mm bis 0,5 mm, bevorzugt von 0,2 mm zueinander aufweisen, wobei sich der Abstand senkrecht zur Rillenerstreckung zwischen den einander zugewandten Rillenkanten der benachbarten Rillen an der Reifenoberfläche bemisst und dass die umlaufenden Rillen (8, 15) eine Rillenbreite (B_{O,S}) von 1 mm bis 4 mm aufweisen, wobei sich die Rillenbreite senkrecht zur Rillenerstreckung bemisst.

2. Fahrzeugluftreifen nach Anspruch 1,
**dadurch gekennzeichnet, dass** die umlaufenden Rillen (8) zumindest in die Oberfläche einer Offshoulder (6) in einer Höhe von 75 % - 90 % der Seitenflanke (H), vorzugsweise in einer Höhe von 75 % - 85 % der Seitenflanke (H) vertieft eingebracht sind.

3. Fahrzeugluftreifen nach einem oder mehreren der vorangehenden Ansprüche,
**dadurch gekennzeichnet, dass** die in der Offshoulder (6) umlaufenden Rillen (8) über den Reifenumfang durchgängig und/ oder über den Reifenumfang mit Unterbrechungen (10) angeordnet sind.

4. Fahrzeugluftreifen nach Anspruch 3,
**dadurch gekennzeichnet, dass** die unterbrochen umlaufenden Rillen (8) vorzugsweise oder ausschließlich an denjenigen Stellen Unterbrechungen (10) aufweisen, an denen vom Laufstreifenprofil in die Offshoulder (6) herunterreichende Querrillen (11) die umlaufenden Rillen (8) kreuzen, wobei die an den Unterbrechungen (10) durchbrochenen umlaufenden Rillen (8) beabstandet zu den Querrillen (11) angeordnet sind.

5. Fahrzeugluftreifen nach einem oder mehreren der vorangehenden Ansprüche,
**dadurch gekennzeichnet, dass** die umlaufenden Rillen (8, 15) eine Rillentiefe (T_{O,S}) von 0,3 mm bis 1,0 mm aufweisen, wobei sich die Rillentiefe an der größten Rillentiefe senkrecht auf die gedachte Reifenaußenkontur bemisst.

6. Fahrzeugluftreifen nach einem oder mehreren der vorangehenden Ansprüche,
**dadurch gekennzeichnet, dass** die Außenkontur zwischen zwei benachbart angeordneten Rillen (8) der Offshoulder (6) der Seitenflankenkontur entspricht und in etwa eben ist.

7. Fahrzeugluftreifen nach einem oder mehreren der vorangehenden Ansprüche,
**dadurch gekennzeichnet, dass** nur in der Offshoulder (6) die technisch wirksame Struktur aus ringkreisförmig über den Umfang der Offshoulder umlaufenden Rillen (8) angeordnet ist, wobei die Rillen (8) bevorzugt eine Rillenbreite (B_{O}) von etwa 2,5 mm und bevorzugt eine Rillentiefe (T_{O}) von etwa 0,5 mm aufweisen.

8. Fahrzeugluftreifen nach einem oder mehreren der vorangehenden Ansprüche 1 - 6,
**dadurch gekennzeichnet, dass** nicht nur die Offshoulder (6), sondern zusätzlich die Seitenwand (13) diese technisch wirksame Struktur aus ringkreisförmig über den Umfang der Offshoulder umlaufenden und vertieft in die Reifenseitenwand (13) eingebrachten Rillen (8, 15) aufweist, wobei die Rillen (15) der Reifenseitenwand ebenfalls parallel zueinander und beabstandet voneinander angeordnet sind und wobei die Rillen (15) einen gerundeten Rillengrund (16) aufweisen.

9. Fahrzeugluftreifen nach Anspruch 8,
**dadurch gekennzeichnet, dass** die Geometrie der Rillenstruktur (15) der Seitenwand (13) und die der Offshoulder der Offshoulder (6) gleich ist.

10. Fahrzeugluftreifen nach Anspruch 8,
**dadurch gekennzeichnet, dass** die Geometrie der Rillenstruktur (15) der Seitenwand (13) von der Geometrie der Rillenstruktur (8) der Offshoulder (6) abweicht, wobei die in der Seitenwand (13) angeordneten, umlaufenden Rillen (15) eine Rillenbreite (Bs) von etwa 1,5 mm und eine Rillentiefe (T_{S}) von etwa 0,6 mm aufweisen und wobei die in der Offshoulder (6) angeordneten umlaufenden Rillen (8) eine Rillenbreite (B_{O}) von etwa 2,5 mm und eine Rillentiefe (T_{O}) von etwa 0,5 mm aufweisen.

11. Fahrzeugluftreifen nach einem oder mehreren der Ansprüche 8 bis 10,
**dadurch gekennzeichnet, dass** in der Reifenseitenwand (13) die Oberfläche, welche den Abstand zwischen zwei benachbarten Rillen (15) bildet, ebenfalls vertieft in die Seitenwand (13) eingebracht ist, wobei die Oberfläche parallel zur gedachten Reifenaußenkontur verläuft, wobei die Abstandsoberfläche 0,1 mm bis 0,3 mm, vorzugsweise etwa 0,25 mm vertieft angeordnet ist, wobei sich diese Tiefe (17) senkrecht auf die gedachte Reifenaußenkontur bemisst.

## Claims

1. Vehicle pneumatic tyre (1), in particular for passenger vehicles, with two side flanks (3) which enclose the casing-shaped ground contact area (4) of the tread (5), which ground contact area can be brought into contact with the carriageway, between them, wherein an offshoulder (6) is in each case arranged at a height (H) of 75% - 100% of each side flank (3), as measured from the height of the rim flange (7) of the tyre (1), which is pulled onto a rim (2) and has an operating pressure, in the direction of the ground contact area (4), wherein a technically effective structure composed of channels (8) running circularly over the extent of the offshoulder (6) is introduced in a recessed manner into the surface of at least one offshoulder (6), wherein the channels (8) are arranged parallel to one another and spaced apart from one another, and wherein the channels (8) have a rounded channel base (9), **characterized in that** two adjacently encircling channels (8,15) are at a distance (A_{O,S}) of 0.1 mm to 0.5 mm, preferably of 0.2 mm, from each other, wherein the distance is measured perpendicularly to the channel extent between the mutually facing channel edges of the adjacent channels on the tyre surface, and **in that** the encircling channels (8, 15) have a channel width (B_{O,S}) of 1 mm to 4 mm, wherein the channel width is measured perpendicularly to the channel extent.

2. Vehicle pneumatic tyre according to Claim 1,
**characterized in that** the encircling channels (8) are introduced in a recessed manner at least into the surface of an offshoulder (6) at a height of 75% - 90% of the side flank (H), preferably at a height of 75% - 85% of the side flank (H).

3. Vehicle pneumatic tyre according to one or more of the preceding claims,
**characterized in that** the encircling channels (8) in the offshoulder (6) are arranged continuously over the tyre extent and/or with interruptions (10) over the tyre extent.

4. Vehicle pneumatic tyre according to Claim 3,
**characterized in that** the channels (8) encircling in an interrupted manner have interruptions (10) preferably or exclusively at those points at which transverse channels (11) reaching down from the tread profile into the offshoulder (6) intersect the encircling channels (8), wherein the encircling channels (8) which are interrupted at the interruptions (10) are arranged spaced apart from the transverse channels (11).

5. Vehicle pneumatic tyre according to one or more of the preceding claims,
**characterized in that** the encircling channels (8, 15) have a channel depth (T_{O,S}) of 0.3 mm to 1.0 mm, wherein the channel depth is measured at the greatest channel depth perpendicularly to the imaginary tyre outer contour.

6. Vehicle pneumatic tyre according to one or more of the preceding claims,
**characterized in that** the outer contour between two adjacently arranged channels (8) of the offshoulder (6) corresponds to the side flank contour and is approximately flat.

7. Vehicle pneumatic tyre according to one or more of the preceding claims,
**characterized in that** the technically effective structure consisting of channels (8) encircling circularly over the circumference of the offshore border is arranged only in the offshoulder (6), wherein the channels (8) preferably have a channel width (B_{O}) of approximately 2.5 mm and preferably have a channel depth (T_{O}) of approximately 0.5 mm.

8. Vehicle pneumatic tyre according to one or more of the preceding Claims 1-6,
**characterized in that** not only the offshoulder (6) but additionally the sidewall (13) has said technically effective structure consisting of channels (8, 15) which encircle circularly over the circumference of the offshoulder and are introduced in a recessed manner into the tyre sidewall (13), wherein the channels (15) of the tyre sidewall are likewise arranged parallel to one another and spaced apart from one another, and wherein the channels (15) have a rounded channel base (16).

9. Vehicle pneumatic tyre according to Claim 8,
**characterized in that** the geometry of the channel structure (15) of the sidewall (13) and that of the offshoulder of the offshoulder (6) is identical.

10. Vehicle pneumatic tyre according to Claim 8,
**characterized in that** the geometry of the channel structure (15) of the sidewall (13) differs from the geometry of the channel structure (8) of the offshoulder (6), wherein the encircling channels (15) arranged in the sidewall (13) have a channel width (B_{S}) of approximately 1.5 mm and a channel depth (T_{S}) of approximately 0.6 mm, and wherein the encircling channels (8) arranged in the offshoulder (6) have a channel width (B_{O}) of approximately 2.5 mm and a channel depth (T_{O}) of approximately 0.5 mm.

11. Vehicle pneumatic tyre according to one or more of Claims 8-10,
**characterized in that**, in the tyre sidewall (13), the surface which forms the distance between two adjacent channels (15) is likewise introduced in a recessed manner into the sidewall (13), wherein the surface runs parallel to the imaginary tyre outer contour, wherein the spacing surface is arranged recessed by 0.1 mm to 0.3 mm, preferably approximately 0.25 mm, wherein said depth (17) is measured perpendicularly to the imaginary tyre outer contour.

## Revendications

1. Pneumatique de véhicule (1), en particulier pour voitures particulières, comprenant deux flancs latéraux (3), lesquels forment entre eux la surface de contact avec le sol (4), en forme d'enveloppe et pouvant être amenée en contact avec la chaussée, de la bande de roulement (5), une zone d'épaulement (6) étant respectivement disposée à une hauteur (H) de 75 % à 100 % de chaque flanc latéral (3), mesurée à partir de la hauteur du rebord de jante (7) du pneumatique (1) monté sur une jante (2) et présentant une pression de fonctionnement, en direction de la surface de contact avec le sol (4), une structure à effet technique constituée de rainures (8) s'étendant sous forme circulaire annulaire sur la périphérie de la zone d'épaulement (6) étant ménagée de manière renfoncée dans la surface d'au moins une zone d'épaulement (6), les rainures (8) étant disposées parallèlement les unes aux autres et de manière espacée les unes des autres, et les rainures (8) comprenant un fond de rainure arrondi (9), **caractérisé en ce que** deux rainures (8, 15) s'étendant de manière adjacente sont situées à une distance (A_{O,S}) de 0,1 mm à 0,5 mm, de préférence de 0,2 mm, l'une par rapport à l'autre, la distance se mesurant perpendiculairement à l'étendue de rainure entre les bords de rainure, tournés l'un vers l'autre, des rainures adjacentes sur la surface de pneumatique, et **en ce que** les rainures périphériques (8, 15) présentent une largeur de rainure (B_{O,S}) de 1 mm à 4 mm, la largeur de rainure se mesurant perpendiculairement à l'étendue de rainure.

2. Pneumatique de véhicule selon la revendication 1,
**caractérisé en ce que** les rainures périphériques (8) sont ménagées de manière renfoncée au moins dans la surface d'une zone d'épaulement (6) à une hauteur de 75 % à 90 % du flanc latéral (H), de préférence à une hauteur de 75 % à 85 % du flanc latéral (H).

3. Pneumatique de véhicule selon l'une ou plusieurs des revendications précédentes,
**caractérisé en ce que** les rainures périphériques (8) dans la zone d'épaulement (6) sont disposées de manière continue sur la périphérie du pneumatique et/ou de manière à présenter des interruptions (10) sur la périphérie du pneumatique.

4. Pneumatique de véhicule selon la revendication 3,
**caractérisé en ce que** les rainures périphériques interrompues (8) comprennent des interruptions (10) de préférence ou exclusivement aux emplacements auxquels des rainures transversales (11) s'étendant vers le bas à partir de la sculpture de bande de roulement jusque dans la zone d'épaulement (6) croisent les rainures périphériques (8), les rainures périphériques (8) interrompues au niveau des interruptions (10) étant disposées de manière espacée des rainures transversales (11).

5. Pneumatique de véhicule selon l'une ou plusieurs des revendications précédentes,
**caractérisé en ce que** les rainures périphériques (8, 15) présentent une profondeur de rainure (T_{O,S}) de 0,3 mm à 1,0 mm, la profondeur de rainure se mesurant au niveau de la plus grande profondeur de rainure perpendiculairement au contour extérieur imaginaire de pneumatique.

6. Pneumatique de véhicule selon l'une ou plusieurs des revendications précédentes,
**caractérisé en ce que** le contour extérieur entre deux rainures (8), disposées de manière adjacente, de la zone d'épaulement (6) correspond au contour de flanc latéral et est approximativement plan.

7. Pneumatique de véhicule selon l'une ou plusieurs des revendications précédentes,
**caractérisé en ce que** la structure à effet technique constituée de rainures (8) s'étendant sous forme circulaire annulaire sur la périphérie de la zone d'épaulement n'est disposée que dans la zone d'épaulement (6), les rainures (8) présentant de préférence une largeur de rainure (B_{O}) d'approximativement 2,5 mm et de préférence une profondeur de rainure (T_{O}) d'approximativement 0,5 mm.

8. Pneumatique de véhicule selon l'une ou plusieurs des revendications précédentes 1 à 6,
**caractérisé en ce que** non seulement la zone d'épaulement (6) mais aussi la paroi latérale (13) comprennent cette structure à effet technique constituée de rainures (8, 15) s'étendant sous forme circulaire annulaire sur la périphérie de la zone d'épaulement et ménagées de manière renfoncée dans la paroi latérale de pneumatique (13), les rainures (15) de la paroi latérale de pneumatique étant disposées également parallèlement les unes aux autres et de manière espacée les unes des autres, et les rainures (15) comprenant un fond de rainure arrondi (16).

9. Pneumatique de véhicule selon la revendication 8, **caractérisé en ce que** la géométrie de la structure rainurée (15) de la paroi latérale (13) et celle de la zone d'épaulement de la zone d'épaulement (6) sont identiques.

10. Pneumatique de véhicule selon la revendication 8,
**caractérisé en ce que** la géométrie de la structure rainurée (15) de la paroi latérale (13) diffère de la géométrie de la structure rainurée (8) de la zone d'épaulement (6), les rainures périphériques (15) disposées dans la paroi latérale (13) présentant une largeur de rainure (B_{S}) d'approximativement 1,5 mm et une profondeur de rainure (Ts) d'approximativement 0,6 mm, et les rainures périphériques (8) disposées dans la zone d'épaulement (6) présentant une largeur de rainure (B_{O}) d'approximativement 2,5 mm et une profondeur de rainure (T_{O}) d'approximativement 0,5 mm.

11. Pneumatique de véhicule selon l'une ou plusieurs des revendications 8 à 10,
**caractérisé en ce que**, dans la paroi latérale de pneumatique (13), la surface qui forme l'espacement entre deux rainures adjacentes (15) est ménagée également de manière renfoncée dans la paroi latérale (13), la surface s'étendant parallèlement au contour extérieur imaginaire de pneumatique, la surface d'espacement étant disposée de manière renfoncée de 0,1 mm à 0,3 mm, de préférence d'approximativement 0,25 mm, cette profondeur (17) se mesurant perpendiculairement au contour extérieur imaginaire de pneumatique.
